# EUROPÄISCHE PATENTSCHRIFT

(11) **EP 0 731 284 B1**
(45) Veröffentlichungstag und Bekanntmachung des Hinweises auf die Patenterteilung: **13.06.2001**
(21) Anmeldenummer: 96103638.1
(22) Anmeldetag: 08.03.1996
(51) Int. Cl.: F16D 1/09, F16B 7/14

(54) **Klemmvorrichtung für zylindrische Teile**
Clamp for cylindric elements
Collier de verrouillage pour éléments cylindriques

(30) Priorität: 09.03.1995 DE 19508175
(43) Veröffentlichungstag der Anmeldung: 11.09.1996
(73) Patentinhaber: Montanhydraulik GmbH, D-59439 Holzwickede (DE)
(72) Erfinder: Bräckelmann, Gerd, 59425 Unna (DE)
(74) Vertreter: Henfling, Fritz, Dipl.-Ing.

(56) Entgegenhaltungen:
- DE-A- 1 804 857
- US-A- 5 492 430

## Beschreibung

Die Erfindung betrifft eine Klemmvorrichtung für zylindrische, in achsialer Richtung verlagerbare oder drehende Teile (Stangen bzw. Wellen), bestehend aus gegen die Stange bzw. die Welle zur Anlage kommenden, über deren Umfang verteilten Klemmsegmenten mit Außenkonizität, einer die Klemmsegmente einfassenden, in achsialer Richtung gegenüber den Klemmsegmenten verlagerbare Klemmbuchse mit gegenläufiger Konizität ihrer Anlagefläche gegen die Klemmsegmente einer Selbsthemmung bewirkenden Konizität und einem Klemmsegmente und Klemmbuchse einfassenden, sich an der Stange bzw. der Welle über Dichtungen abstützenden druckdichten Gehäuse, die Klemmbuchse unter Belassung beidseitigen Freiraums, mit einer auf einem Ende auf die Klemmbuchse einwirkenden, sich am Gehäuse abstützenden, der Klemmbuchse Anstelltendenz vermittelten Feder und einem Druckmittelzugang zum Federraum.

Nach dem Stand der Technik, siehe z.B. DE-A-1 804 857, wird die Klemmsituation sichergestellt durch die die Klemmbuchse hinterfangende, der Klemmbuchse Anstelltendenz vermitteltende Feder und/oder durch auf die Klemmbuchse einwirkendes Druckmittel. Ermüdung der Feder, schlimmstenfalls Federbruch und/oder Abbau von Druckmitteldruck, etwa infolge von Leckage im Druckmittelsystem, können hierbei zu ungewollter, risikobehafteter Aufhebung der Klemmung führen.

Ausgehend vom Stand der Technik lag der Erfindung die Aufgabe zugrunde eine Klemmvorrichtung zu entwickeln, die die mit bekannten Klemmvorrichtungen verbundenen Risiken vermeidet.

Die Aufgabe wird mit einer gattungsgemäßen Klemmvorrichtung gelöst, deren sich beidends über Ringdichtungen am Gehäuse abstützende Klemmbuchse durch beidends aufbringbaren Druckmitteldruck lösbar ist.

Die Klemmung wird hierbei dadurch hervorgerufen, daß Druckmittel in den Federraum der Klemmvorrichtung eingespeist wird, unter dessen Einwirkung die Klemmbuchse eine Aufweitung erfährt, die es den die Klemmbuchse hinterfangenden Federn ermöglicht, die Klemmbuchse gegenüber den Klemmsegmenten in Anstellrichtung zu verlagern. Wird der Anstelldruck sodann abgeworfen, schrumpft die Klemmbuchse, die Klemmsegmente gegenüber der Stange bzw. Welle festlegend. Zum Lösen der Klemmvorrichtung wird wiederum Druckmittel in den Federraum eine erneute Aufweitung der Klemmbuchse bewirkend eingespeist, des weiteren wird die Klemnmbuchse dann auch auf der vom Federraum abgekehrten Seite mit Druckmittel beaufschlagt, unter dessen Einwirkung die Klemmbuchse gegen den Druck der Anstellfeder gegenläufig zur Anstellrichtung verlagert wird, womit ein Lösen der Klemmsegmente einhergeht. Die eigentliche Klemmung wird hierbei also über die der Klemmbuchse innewohnende Schrumpfspannung bewirkt, die dem Risiko einer Beeinträchtigung nicht unterliegt.

Der Anstelleffekt der die Klemmbuchse hinterfangenden Federn kann dadurch eine Unterstützung erfahren, daß die federraumseitige Druckangriffsfläche der Klemmbuchse größer ausgelegt wird als am anderen Ende. Das Aufweitungsvermögen der Klemmbuchse läßt sich durch verschiedene Maßnahmen verbessern, so durch in einer der korrespondieren Flächen der Klemmsegmente und der Klemmbuchse regelmäßig über die Fläche verteilte, vom Federraum her zugängliche Rücksprünge, wobei es sich vorzugsweise um Radialnuten handelt, dann auch dadurch, daß zwischen Gehäuse und Klemmbuchse ein Freiraum ausgebildet wird, der durch die Dichtungen, über die sich die Klemmbuchse am Gehäuse abstützt, druckdicht eingegrenzt ist.

Als vergleichsweise einfache Lösung für das Lösen der Klemmbuchse bietet sich die Beaufschlagung der Klemmbuchse auf der vom Federraum abgekehrten Seite durch sich im Gehäuse führende druckmittelbeaufschlagbare Lösungskolben an, wobei es sich um eine Mehrzahl von über den Umfang der Klemmbuchse verteilten Kolben oder aber um einen Ringkolben handeln kann.

Unter Beibehaltung des Grundgedankens der Betätigung der Klemmvorrichtung durch beidends aufbringbaren Druckmitteldruck wird weitergehend als Alternative eine Klemmvorrichtung, bestehend aus gegen die Stange bzw. die Welle zur Anlage kommenden, über deren Umfang verteilten Klemmsegmenten mit Außenkonizität und einem die Klemmsegmente einfassenden, sich an der Stange bzw. Welle unter Belassung beidseitigem Freiraums mit gegenläufiger Konizität der Anlagefläche gegen die Klemmsegmente bei einer Selbsthemmung bewirkenden Konizität über Dichtungen abstützenden Gehäuse mit auf einem Ende auf die in achsialer Richtung verlagerbaren Klemmsegmente einwirkenden, sich am Gehäuse abstützenden, den Klemmsegmenten Anstelltendenz vermittelnden Federn und einem Druckmittelzugang zum Federraum vorgeschlagen, die auf die Klemmbuchse verzichtet, sich in der Fertigung allerdings als aufwendiger erweist. Der Anstelleffekt der auf die Klemmsegmente einwirkenden Federn kann durch sich im Gehäuse führende druckmittelbeaufschlagbare Anstellkolben verbessert werden, wofür das gleiche Druckmittel zur Verfügung steht, mit dem die Aufweitung des Gehäuses bewirkt wird.

In der Zeichnung sind Ausführungsbeispiele beider Versionen der neuen Klemmvorrichtung dargestellt. Es zeigen:
- Figur 1: die dreiteilige Version der Klemmvorrichtung im Schnitt,
- Figur 2: eine Ausgestaltung der Klemmvorrichtung nach Figur 1 im Schnitt,
- Figur 3: die zweiteilige Version der Klemmvorrichtung, ebenfalls im Schnitt.

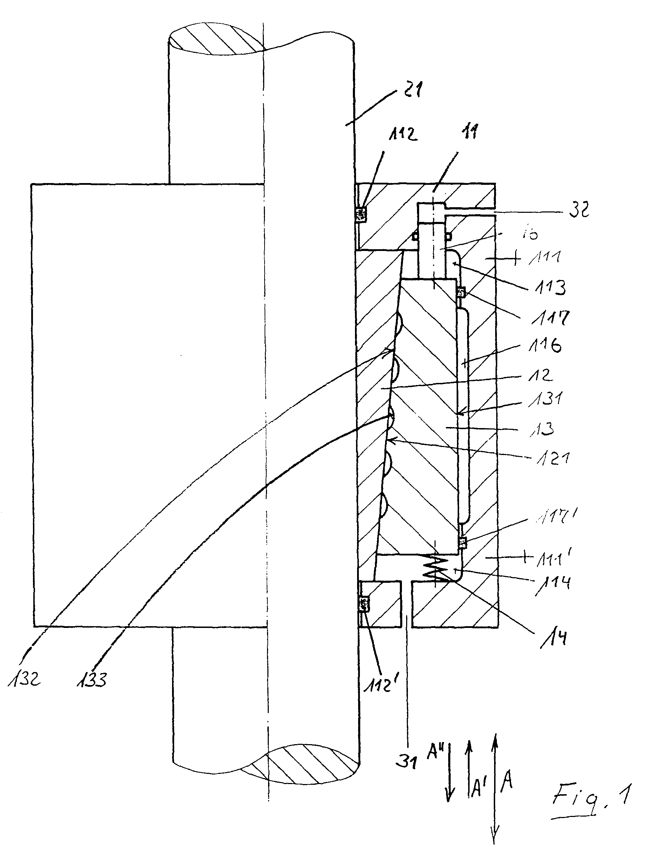

Die Klemmvorrichtung nach Figur 1 besteht aus dem lagefixierten (111, 111') von der Stange 21 abgedichtet (112, 112') durchsetzten Gehäuse 11, sich an der Stange 21 abstützende, unter Belassung hinreichenden Abstandes voneinander regelmäßig über den Umfang der Stange 21 verteilte Klemmsegmente 12 und eine die Klemmsegmente 12 umgebende in achsialer Richtung verlagerbare (Doppelpfeil A) Klemmbuchse 13 unter Belassung von Freiräumen 113, 114 an den Stirnseiten der Klemmbuchse 13, sich an der Mantelfläche 131 der Klemmbuchse 13 über Dichtungen 117, 117' abstützend einfaßt. Die korrespondierenden Flächen 121, 132 der Klemmsegmente 12 und der Klemmbuchse 13 sind gegenläufig konisch ausgebildet, wobei eine Konizität gewählt ist, die eine hinreichende Selbsthemmung zwischen den Klemmsegmenten 12 und der Klemmbuchse 13 gewährleistet, im dargestellten Fall ca. 5°. In der Anlagefläche 132 der Klemmbuchse 13 sind beabstandet eine Mehrzahl von Ringnuten 133 ausgebildet. Hinter der Klemmbuchse 13 ist ein durch Dichtungen 117, 117' abgeschirmter druckloser Raum 116 ausgebildet. In Anstellrichtung der Klemmbuchse 13 (Pfeil A') ist die Klemmbuchse 13 von einem der Klemmbuchse 13 Anstelltendenz vermittelten Feder 14 hinterfangen, der Federraum 114 ist dann auch druckmittelbeaufschlagbar (31). Auf der gegenüberliegenden Seite wirken auf die Klemmbuchse 13 über den Umfang verteilt mindestens zwei druckmittelbeaufschlagbare (32) Kolben 16 ein.

Zum Spannen der Klemmvorrichtung wird über die Einspeisung 31 in den Federraum 114 bei entlastetem Kolben 16 Druckmittel eingespeist, unter dessen Einwirkung die Klemmbuchse 13 eine Verlagerung der Buchse im Sinne des Pfeiles A' unter der Einwirkung der sie hinterfangenden Feder 14 gegenüber den Klemmsegmenten 12 ermöglichende Aufweitung erfährt. Bei anschließender Druckentlastung des Gehäuseinneren schrumpft die Klemmbuchse 13, die Klemmsegmente 12 gegenüber der von ihnen umgebenen Stange 21 unter Ausnutzung der Schrumpfspannung festlegend. Soll die Klemmvorrichtung gelöst werden, wird wiederum Druckmittel über die Zuleitung 31 in das Gehäuseinnere eingespeist womit dann auch wieder eine Aufweitung der Klemmbuchse 13 einhergeht, die in aufgeweitetem Zustand durch den druckmittelbeaufschlagten (32) Kolben 16 nunmehr im Sinne des Pfeiles A" verlagert wird, womit die Klemmung der Stange 21 über die Klemmsegmente 12 aufgehoben wird.

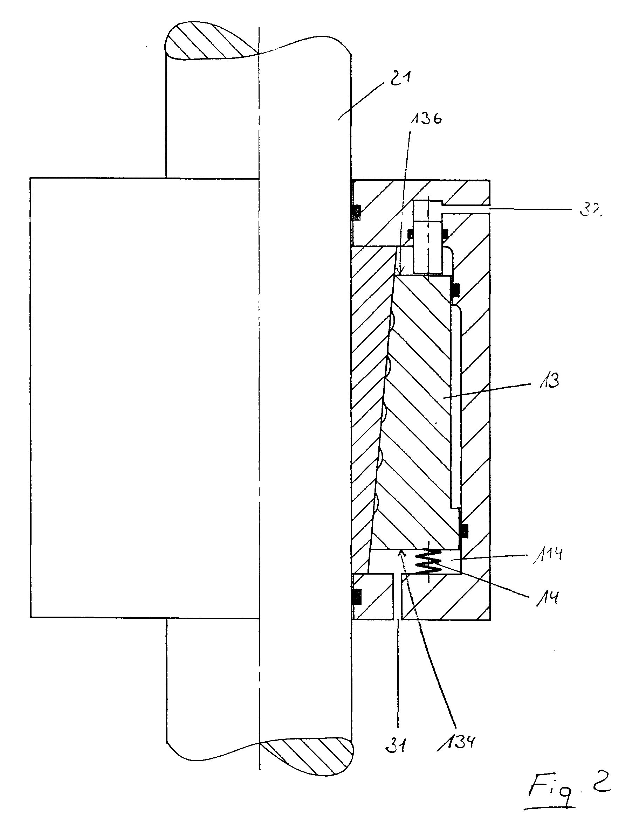

Die in Figur 2 dargestellte Klemmvorrichtung unterscheidet sich von der in Figur 1 dargestellten Vorrichtung lediglich dadurch, daß die wirksame federraumseitige Druckangriffsfläche 134 der Klemmbuchse 113 größer ausgelegt ist, als die gegenüberliegende Druckangriffsfläche 136. Daraus resultiert die Unterstützung des Anstelleffekts der auf die Klemmbuchse 13 einwirkenden Federn 14 durch das in den Federraum 114 eingespeiste Druckmittel zur Aufweitung der Klemmbuchse 13.

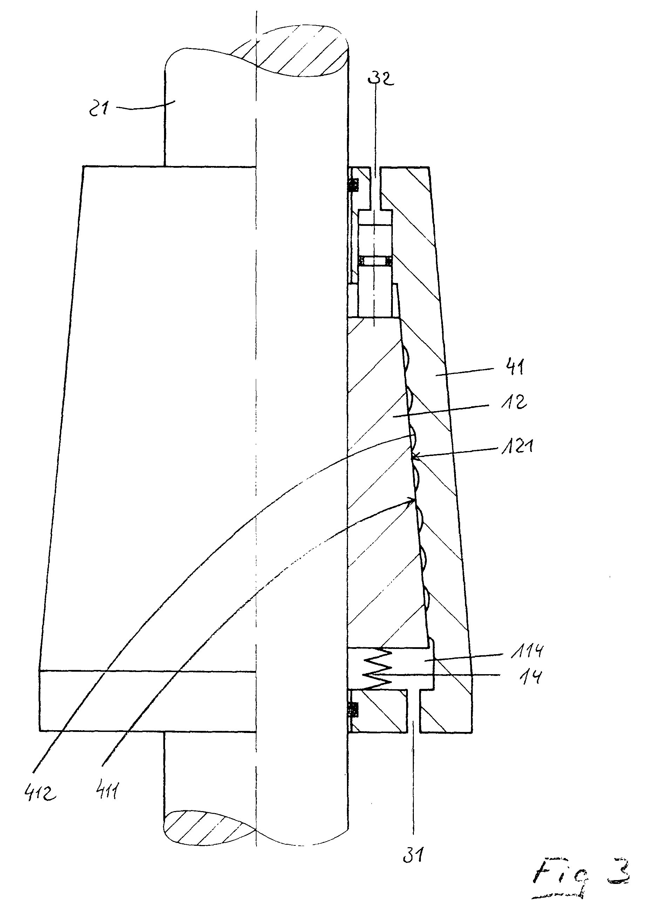

Bei der Klemmvorrichtung nach Figur 3 wird die Funktion der bei der Klemmvorrichtung nach Figur 1 vorgesehenen Klemmbuchse vom Gehäuse 41 mitübernommen. Hierbei weist die Innenwandung 411 des Gehäuses 41 eine gegenläufige Konizität zur Konizität der korrespondierenden Wandung 121 der Klemmsegmente 12 auf. Im dargestellten Fall sind in die Gehäusewandung 411 Radialnuten 412 eingearbeitet. Die Funktionsweise der Klemmvorrichtung in Figur 2 entspricht der der Klemmvorrichtung nach Figur 1.

## Patentansprüche

1. Klemmvorrichtung für zylindrische, in achsialer Richtung verlagerbare oder drehende Teile (Stangen bzw. Wellen), bestehend aus gegen die Stange bzw. die Welle (21) zur Anlage kommenden, über deren Umfang verteilten Klemmsegmenten, (12) mit Außenkonizität, einer die Klemmsegmente (12) einfassenden, in achsialer Richtung gegenüber den Klemmsegmenten (12) verlagerbaren Klemmbuchse (13) mit gegenläufiger eine Selbsthemmung bewirkender Konizität ihrer Anlagefläche (132) gegen die Klemmsegmente (12) und einem Klemmsegmente (12) und Klemmbuchse (13) einfassenden, sich an der Stange bzw. der Welle (21) über Dichtungen abstützenden druckdichten Gehäus (11), die Klemmbuchse (13) unter Belassung beidseitigen Freiraums (113, 114), mit auf einem Ende der Klemmbuchse (13) einwirkenden, sich am Gehäuse (11) abstützenden, der Klemmbuchse (13) Anstelltendenz vermittelnden Federn (14) und einem Druckmittelzugang (31) zum Federraum (114), gekennzeichnet durch eine sich beidends über Ringdichtungen (117, 117') am Gehäuse (11) abstützende, durch beidends aufbringbaren Druckmitteldruck lösbare Klemmbuchse (13).

2. Klemmvorrichtung nach Anspruch 1, dadurch gekennzeichnet, daß die Druckangriffsfläche der Klemmbuchse (13) federraumseitig (114) größer ausgelegt ist als am anderen Ende (113).

3. Klemmvorrichtung nach Anspruch 1 oder Anspruch 2, dadurch gekennzeichnet, daß in einer der korrespondierenden Flächen der Klemmsegmente (12) und der Klemmbuchse (13) regelmäßig über die Fläche verteilt vom Federraum (114) her zugängliche Rücksprünge (133) ausgebildet sind.

4. Klemmvorrichtung nach Anspruch 3, gekennzeichnet durch Rücksprünge in Gestalt von Radialnuten (133).

5. Klemmvorrichtung nach einem der Ansprüche 1 bis 4, dadurch gekennzeichnet, daß zwischen Gehäuse (11) und Klemmbuchse (13) ein druckdicht eingegrenzter Freiraum (116) ausgebildet ist.

6. Klemmvorrichtung nach einem der Ansprüche 1 bis 5, gekennzeichnet durch eine Konizität ≤ 5°

7. Klemmvorrichtung nach einem der Ansprüche 1 bis 6, gekennzeichnet durch eine Mehrzahl von sich im Gehäuse (11) führenden, regelmäßig über den Umfang der Klemmbuchse (13) verteilten, druckmittelbeaufschlagbaren Lösungskolben (16).

8. Klemmvorrichtung nach einem der Ansprüche 1 bis 6, gekennzeichnet durch einen sich im Gehäuse (11) führenden, auf die Klemmbuchse (13) einwirkenden, druckmittelbeaufschlagbaren ringförmigen Lösungskolben.

9. Klemmvorrichtung für zylindrische, in axialer Richtung verlagerbare oder drehende Teile (Stangen bzw. Wellen), bestehend aus gegen die Stange bzw. die Welle (21) zur Anlage kommenden, über deren Umfang verteilten Klemmsegmenten (12) mit Außenkonizität (121) und einem die Klemmsegmente (12) einfassenden, sich an der Stange bzw. Welle (21) unter Belassung beidseitigen Freiraums mit gegenläufiger Konizität ihrer Anlagefläche (141) gegen die Klemmsegmente (12) bei einer Selbsthemmung bewirkenden Konizität über Dichtungen abstützenden Gehäuse (41) mit auf einem Ende auf die in achsialer Richtung verlagerbaren Klemmsegmente (12) einwirkenden, sich am Gehäuse (41) abstützenden, den Klemmsegmenten (12) Anstelltendenz vermittelnden Federn (14) und einem Druckmittelzugang (31) zum Federraum (114), wobei die Klemmsegmente (12) durch beidends aufbringbaren Druckmitteldruck lösbar sind.

10. Klemmvorrichtung nach Anspruch 9, dadurch gekennzeichnet, daß die Anstellfedern (14) sich über eine Ringscheibe an den Klemmsegmenten (12) abstützen.

11. Klemmvorrichtung nach Anspruch 9 oder Anspruch 10, gekennzeichnet durch sich im Gehäuse (41) führende, die Wirkung der Anstellfedem (14) unterstützende, gegen die Klemmsegmente (12) zur Anlage kommende druckmittelbeaufschlagbare Kolben.

12. Klemmvorrichtung nach einem der Ansprüche 1 bis 11, gekennzeichnet durch ein lagefixiertes Gehäuse (11 bzw. 41).

13. Klemmvorrichtung nach einem der Ansprüche 1 bis 11, gekennzeichnet durch ein mit der Welle (21) drehendes Gehäuse (11 bzw. 41) mit Druckmittelzuführungen über Drehverbindungen.

## Claims

1. Clamping apparatus for cylindrical parts (rods or shafts respectively), which are displaceable or rotate in the axial direction, said apparatus comprising clamping segments (12), which come to abut against the rod or the shaft (21) respectively and are distributed over the circumference thereof, said segments having external conicity, said apparatus comprising a clamping bush (13) which encloses the clamping segments (12) and is displaceable in the axial direction relative to the clamping segments (12), said clamping bush having an oppositely orientated conicity, which causes automatic locking, for its abutment face (132) abutting against the clamping segments (12), and said apparatus comprising a pressure-tight housing (11) which encloses clamping segments (12) and clamping bush (13) and is supported via seals on the rod or the shaft (21) respectively, the clamping bush (13) having, so as to leave a free space (113, 114) on both sides, springs (14) which act on one end of the clamping bush (13), are supported on the housing (11) and impart a tendency to adjust to the clamping bush (13), and said clamping bush having a pressure medium inlet (31) leading to the spring chamber (114), characterised by a clamping bush (13), which is supported at both ends on the housing (11) via annular seals (117, 117') and is releasable by pressure medium pressure, which can be applied to both ends.

2. Clamping apparatus according to claim 1, characterised in that the area of pressure contact of the clamping bush (13) is designed to be greater on the spring chamber side (114) than at the other end (113).

3. Clamping apparatus according to claim 1 or claim 2, characterised in that sockets (133), which are accessible from the spring chamber (114), are provided in one of the corresponding faces of the clamping segments (12) and of the clamping bush (13) so as to be distributed regularly over the surface.

4. Clamping apparatus according to claim 3, characterised by sockets in the form of radial grooves (133).

5. Clamping apparatus according to one of claims 1 to 4, characterised in that a free space (116), which is defined in a pressure-tight manner, is provided between housing (11) and clamping bush (13).

6. Clamping apparatus according to one of claims 1 to 5, characterised by a conicity ≤ 5°.

7. Clamping apparatus according to one of claims 1 to 6, characterised by a plurality of release pistons (16), which extend in the housing (11), are regularly distributed over the circumference of the clamping bush (13) and can be acted upon by pressure medium.

8. Clamping apparatus according to one of claims 1 to 6, characterised by an annular release piston, which extends in the housing (11), acts on the clamping bush (13) and can be acted upon by pressure medium.

9. Clamping apparatus for cylindrical parts (rods or shafts respectively), which are displaceable or rotate in the axial direction, said apparatus comprising clamping segments (12), which come to abut against the rod or the shaft (21) respectively and are distributed over the circumference thereof, said segments having external conicity (121), and said apparatus comprising a housing (41) which encloses the clamping segments (12) and, with a conicity which causes automatic locking, is supported via seals on the rod or shaft (21) respectively, so as to leave a free space on both sides, with an oppositely orientated conicity for its abutment face (141) abutting against the clamping segments (12), said housing having springs (14) which, at one end, act on the clamping segments (12) which are displaceable in the axial direction, said springs being supported on the housing (41) and imparting a tendency to adjust to the clamping segments (12), and said housing having a pressure medium inlet (31) leading to the spring chamber (114), the clamping segments (12) being releasable by pressure medium pressure, which can be applied to both ends.

10. Clamping apparatus according to claim 9, characterised in that the adjusting springs (14) are supported on the clamping segments (12) via an annular disc.

11. Clamping apparatus according to claim 9 or claim 10, characterised by pistons, which extend in the housing (41); aid the action of the adjusting springs (14), come to abut against the clamping segments (12) and can be acted upon by pressure medium.

12. Clamping apparatus according to one of claims 1 to 11, characterised by a positionally secured housing (11 or 41 respectively).

13. Clamping apparatus according to one of claims 1 to 11, characterised by a housing (11 or 41 respectively), which rotates with the shaft (21) and has pressure medium supply means via rotary joints.

## Revendications

1. Dispositif de serrage pour pièces cylindriques, déplaçables dans la direction axiale ou tournantes (barres ou arbres), constitué de segments de serrage (12) avec conicité extérieure, qui sont répartis sur son pourtour et qui viennent s'appliquer contre la barre ou l'arbre (21), d'un manchon de serrage (13) qui enserre les segments de serrage (12) et qui est déplaçable dans la direction axiale par rapport aux segments de serrage (12) et qui présente une conicité en sens contraire de sa surface d'application (132) contre les segments de serrage (12) qui provoque un auto-blocage, ainsi que d'un boîtier (11) tenant la pression, qui enserre les segments de serrage (12) et le manchon de serrage (13) et qui prend appui contre la barre ou l'arbre (21) par des garnitures d'étanchéité, en laissant un espace libre (113, 114) des deux côtés, avec des ressorts (14) qui agissent sur une extrémité du manchon de serrage (13), qui prennent appui contre le boîtier (11) et qui confèrent au manchon de serrage (13) une tendance au serrage, ainsi qu'avec un accès (31) du fluide sous pression à la chambre de ressort (114), caractérisé par un manchon de serrage (13) qui prend appui à ses deux extrémités contre le boîtier (11), par des bagues d'étanchéité (117, 117') et qui peut être desserré par une pression de fluide sous pression à appliquer aux deux extrémités.

2. Dispositif de serrage selon la revendication 1, caractérisé en ce que la surface d'attaque de la pression du manchon de serrage (13) est plus grande côté chambre de ressort (114) qu'à l'autre extrémité (113).

3. Dispositif de serrage selon la revendication 1 ou la revendication 2, caractérisé en ce que dans l'une des surfaces correspondantes des segments de serrage (12) et du manchon de serrage (13), sont formés des retraits (133) régulièrement répartis sur la surface et qui sont accessibles à partir de la chambre de ressort (114).

4. Dispositif de serrage selon la revendication 3, caractérisé par des retraits sous la forme de rainures radiales (133).

5. Dispositif de serrage selon l'une des revendications 1 à 4, caractérisé en ce qu'un espace libre (116) délimité de manière étanche à la pression est formé entre le boîtier (11) et le manchon de serrage (13).

6. Dispositif de serrage selon l'une des revendications 1 à 5, caractérisé par une conicité ≤ à 5°.

7. Dispositif de serrage selon l'une des revendications 1 à 6, caractérisé par une pluralité de pistons de déverrouillage (16) qui passent dans le boîtier (11), sont régulièrement répartis sur le pourtour du manchon de serrage (13) et qui peuvent être alimentés en fluide sous pression.

8. Dispositif de serrage selon l'une des revendications 1 à 6, caractérisé par un piston de déverrouillage annulaire qui passe dans le boîtier (11), qui agit sur le manchon de serrage (13) et qui peut être alimenté en fluide sous pression.

9. Dispositif de serrage pour pièces cylindriques, déplaçables dans la direction axiale ou tournantes (barres ou arbres), constitué de segments de serrage (12) avec conicité extérieure (121) ainsi que d'un boîtier (41) qui enserre les segments de serrage (12), qui prend appui, par des garnitures d'étanchéité, contre la barre ou l'arbre (21), en laissant un espace libre des deux côtés, avec conicité en sens contraire de sa surface d'application (141) contre les segments de serrage (12), avec une conicité provoquant un auto-blocage, avec des ressorts (14) qui agissent sur une extrémité, sur les segments de serrage (12) déplaçables dans la direction axiale, qui prennent appui contre le boîtier (41) et qui confèrent aux segments de serrage (12) une tendance au serrage, ainsi qu'avec un accès (31) du fluide sous pression à la chambre de ressort (114), les segments de serrage (12) pouvant être desserrés par une pression du fluide sous pression à appliquer aux deux extrémités.

10. Dispositif de serrage selon la revendication 9, caractérisé en ce que les ressorts de serrage (14) prennent appui contre les segments de serrage (12), par un disque annulaire.

11. Dispositif de serrage selon la revendication 9 ou 10, caractérisé par des pistons qui passent dans le boîtier (14), qui soutiennent l'action des ressorts de serrage (14), qui viennent s'appliquer contre les segments de serrage (12) et qui peuvent être alimentés en fluide sous pression.

12. Dispositif de serrage selon l'une des revendications 1 à 11, caractérisé par un boîtier (11 ou 41) fixé dans sa position.

13. Dispositif de serrage selon l'une des revendications 1 à 11, caractérisé par un boîtier (11 ou 41), qui tourne avec l'arbre (21), avec des arrivées de fluide sous pression par des raccords tournants.
